# EUROPEAN PATENT SPECIFICATION

(11) **EP 0 606 052 B1**
(45) Date of publication and mention of the grant of the patent: **16.07.1997**
(21) Application number: 93830536.4
(22) Date of filing: 30.12.1993
(51) Int. Cl.: B27G 19/10, B23Q 5/04, B27F 1/02

(54) **Working unit with two spindles for machine tools, for the machining of workpieces made of wood or similar material**
Bearbeitungseinheit mit zwei Spindeln für Werkzeuge zum Bearbeiten von Holzwerkstücker oder dergleichen
Unité d'usinage à deux broches pour machine-outil, pour usiner des pièces en bois ou similaire

(30) Priority: 30.12.1992 IT FI920240
(43) Date of publication of application: 13.07.1994
(73) Proprietor: DITTA BACCI PAOLINO DI GIUSEPPE BACCI DI AGOSTINO BACCI, I-56021 Cascina, Pisa (IT)
(72) Inventor: Ruggieri, Alberto, I-56025 Pontedera, Oisa (IT)
(74) Representative: Mannucci, Gianfranco, Dott.-Ing.

(56) References cited:
- EP-A- 0 410 173
- EP-A- 0 455 127
- EP-A- 0 462 940
- DE-A- 4 107 946
- GB-A- 1 232 876
- GB-A- 2 053 759
- GB-A- 2 190 626
- US-A- 4 769 885

## Description

The invention relates to a working unit for a machine tool for machining wood, particularly a cutting-off, milling, or cutting-off and milling, or cutting-off and milling and boring, or squaring, or other similar machine, according to the preamble of claim 1. Such a unit is known from GB-A-1232876.

More particularly, the invention relates to a working unit for machining wood, comprising at least two spindles with parallel axes with identical and counter-rotating milling tools for machining the ends of workpieces made of wood while avoiding the splintering of the workpieces on the tool entry and exit edges.

The working units described above generally perform cutting-off and milling machining at the ends of workpieces of wood similar to straight or curved beams.

The machining takes place in a direction approximately perpendicular to the fibres of the wood, and therefore it is necessary to take steps to avoid the splintering of the material along the tool entry and exit edges of the surface to be machined.

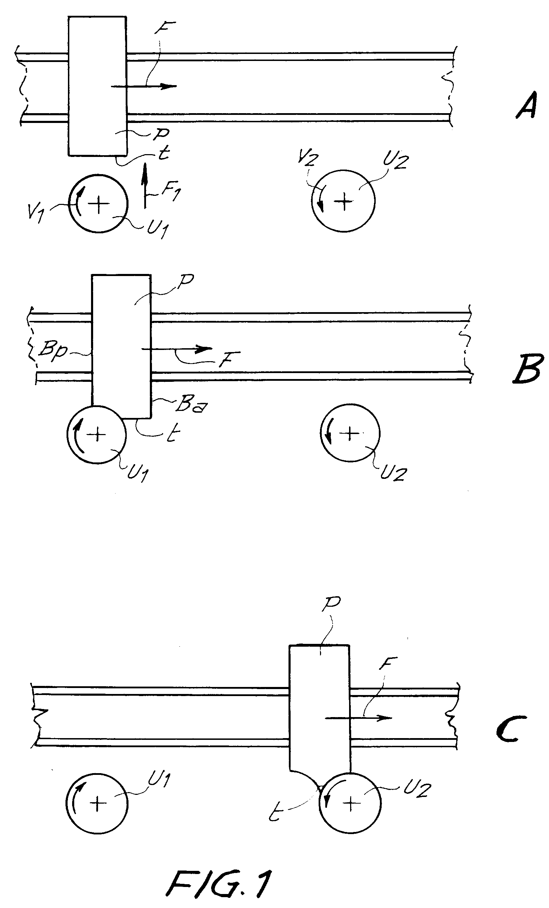

In order to avoid splintering, machine tools provided with two independent and counter-rotating spindles, each carrying a milling tool, have been suggested (EP-A-0410173). The tool approach and workpiece feed movements are provided in such a way that the splintering phenomenon is avoided. Fig. 1 shows in a highly schematic way three successive machining stages with a machine of a known type. In the diagram in Fig. 1, U1 and U2 are schematic representations of the two tools rotating about axes perpendicular to the plane of the figure. The directions of rotation are indicated by V1 and V2 and are clockwise and anticlockwise respectively. P indicates the workpiece, whose end, indicated by t, is to be machined. The arrow F indicates the direction of advance of the workpiece, in other words the feed movement. It is evident that the feed movement may be obtained by keeping the workpiece fixed with respect to the frame and moving the spindles of the tools U1 and U2, or vice versa.

The axis of the tool U1 is movable as shown by F1 in a direction perpendicular to the direction of feed of the workpiece P with respect to the tools, while the axis of the tool U2 is fixed. In the initial machining stage (Fig. 1A), the workpiece P is made to advance as shown by the arrow F without coming into contact with the tool U1. The tool U1 is then moved as shown by the arrow F1 and comes into contact with the surface t of the workpiece P in such a way that it machines only the area of the surface adjacent to the rear edge Bp of the workpiece P. The direction of rotation (clockwise) of the tool U1 prevents splintering, since it tends to compress the fibres (which extend parallel to the edge Bp). This stage of machining is illustrated in Fig.1B. The workpiece P is then made to advance towards the second tool U2 (see Fig. 1C) which works on the surface t at the front edge Ba, completing the machining of the surface t of the workpiece. There are also machines with a reverse movement of the movable spindle, which moves away from the workpiece when it is not required to machine it.

Although they effectively prevent the splintering of the wood, these known machines have considerable disadvantages due to the need to have two independent milling or routing units available. This entails an increase in the length of the machine bed and an increase in costs. If the machine were of the double type, in other words such that it permits simultaneous machining of the two ends of the workpiece, four independent milling units would be required. This not only represents considerable plant costs, but also entails very long tool adjustment times, since the two (or four) assemblies are completely independent, and any adjustment to one of the assemblies requires a re-adjustment to the other.

The subject of the invention is a working unit for machine tools which overcomes the disadvantages of conventional working units. In particular, the object of the invention is to provide a compact and economical unit which, using a system requiring a minimum of adjustment, enables the ends of workpieces made of wood or similar material to be machined without splintering.

These and other objects and advantages, which will be clearly understood from the following text by a person skilled in the art, are achieved with a unit according to claim 1. According to the invention, the two spindles are carried by a common slide and are movable simultaneously and jointly in a direction towards the workpiece substantially perpendicular to the axis of rotation of one of the tools. More particularly, the movement of the spindles towards the workpiece may be substantially perpendicular to the plane containing the axes of rotation of the tools and, in particular, also perpendicular to the workpiece feed movement with respect to the tools. The approach and feed movements between the tools and workpiece are to be understood as relative movements, so that they may be movements of the spindles and/or of the workpiece.

In this way it is possible to adjust a tool with respect to the other (relative adjustment) and subsequently to adjust the whole unit carrying the two tools with respect to the reference surface of the workpiece (absolute adjustment). In the case of absolute re-adjustment, it is no longer necessary to make relative adjustments between the two tools. This makes all the adjustment operations extremely fast even and especially in the case of double machines, in other words those having two units with two spindles each for the simultaneous machining of both ends of the workpieces.

By using a single unit carrying two spindles rotating with parallel axes it is also possible to considerably reduce the longitudinal dimensions of the bed and consequently to reduce the overall dimensions of the machine on which the working unit is mounted.

With an arrangement of this type it is possible to provide a method of machining a workpiece made of wood or similar material with two identical and counter-rotating tools operating in sequence, in which the tools are moved jointly and simultaneously towards the workpiece, and in which each tool machines a portion of the surface. The method of the invention is defined in claim 14.

Further and advantageous embodiments of the working unit according to the invention and of the corresponding machining method are indicated in the attached claims. More particularly, the sequence of approach and feed movements between the tools and workpiece may be such that the workpiece can be machined with a feed movement in one direction only, or with a feed first in one direction and then in the opposite direction, in which case the machining takes place in two successive stages with the reversing of the feed movement.

To provide the adjustment of the tools, in an advantageous embodiment, one of the two spindles is carried by a member which is movable in a direction parallel to the axis of the spindle and if necessary in a direction perpendicular to the said axis. This may be achieved, for example, with a member in the form of a tube with an inner cavity which is eccentric with respect to the outer surface. The eccentricity between the inner cylindrical surface and the outer surface makes it possible, by rotating the tube about its axis, to change the position of the eccentricity and consequently the position of the axis of the spindle carried by the tube with respect to the slide supporting the said tube.

The tube may be fitted with systems for the adjustment of its position parallel to the axis of the tube, thus providing adjustment along the axis of rotation of the tool.

The two spindles may be driven by a single motor with a belt or equivalent type of transmission system, with evident advantages with regards to cost and size; alternatively, they may be driven by two suitably controlled independent motors.

In the following text, reference will always be made to a single working unit provided with two spindles with parallel axes, preferably (but not necessarily) vertical, for corresponding tools such as milling cutters or routers. It is evident, however, that the same inventive concept may also be applied to machines having two units, each with a double spindle, for the simultaneous machining of the two ends of a workpiece. Furthermore, the same unit with a double spindle with parallel axes may be fitted into a machining installation or into a more complex machine in which the routing unit is adjacent to units for joining, drilling, or other similar operations, of a type known per se to persons skilled in the art.

The invention will be more clearly understood from the description and the attached drawing which shows a non-restrictive practical example of the invention. In the drawing,
Fig. 1 shows schematically three successive stages of machining in a machine of the conventional type, to provide a clearer understanding of the invention;
Fig. 2 is a schematic side view of a machine tool according to the invention;
Figs. 3 and 4 are a plan view and a front view in the direction of III-III and IV-IV in Fig. 2 respectively;
Fig. 5 is a section through V-V in Fig. 3;
Figs. 6 and 7 each show in a highly schematic way four successive stages of machining in two possible operating modes of the machine according to the invention; and
Fig. 8 is a diagram of a machine with two symmetrical units.

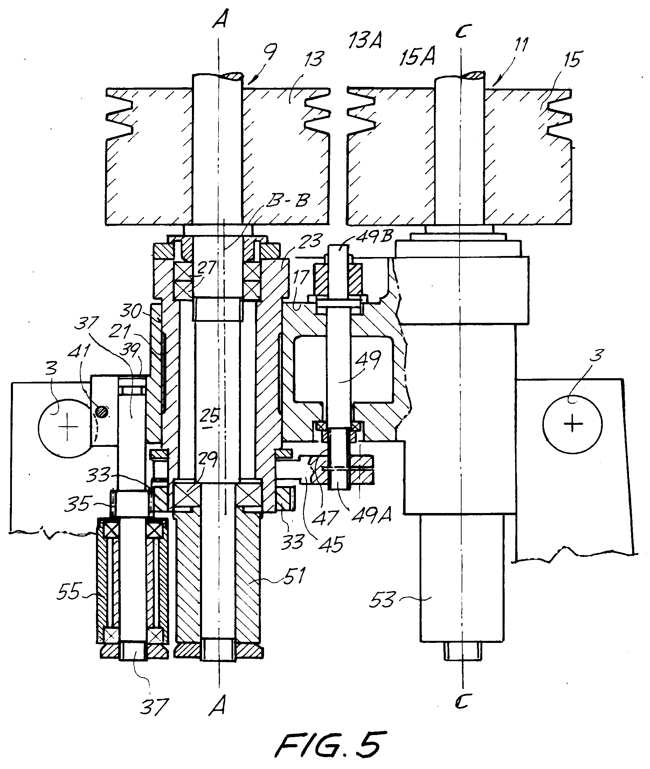

1 indicates in a general way a slide movable as shown by the double arrow Z along guides 3 formed by two parallel cylindrical bars. A motor 5 which, by means of a belt 7, drives two spindles with parallel axes, indicated by 9 and 11, is disposed on the slide 1. The two spindles are provided with corresponding tools 13 and 15 which are identical to each other and counter-rotating. More particularly, in the embodiment illustrated, the tool 13 carried by the spindle 9 rotates in an anticlockwise direction as shown by the arrow f13, while the tool 15 carried by the spindle 11 rotates in the clockwise direction as shown by the arrow f15. The two spindles are carried, in the way described subsequently in greater detail with reference to Fig. 5, on a block 17 which is vertically adjustable with respect to the slide 1 by means of a known system comprising a dovetailed guide 19 which connects the block 17 to the body of the slide 1, and a handwheel 18 associated with a threaded bar 20.

The movement of the slide 1 towards and away from the workpiece, as shown by the arrow Z, is provided by a cylinder and piston system indicated schematically by 12. The rod 12A of the actuator is secured to a clamp schematically indicated by 14. When the clamp 14 is slackened, it is possible to adjust the position of the rod 12A with respect to the guide 3 by means of an adjusting screw 16, which has the effect of permitting the absolute adjustment of the position of the slide 1 with respect to the machine.

The block 17 has a cavity 21 in which a tube 23, carrying the shaft 25 of the spindle 9, is housed and secured. The shaft 25 is carried by bearings 27 and 29 housed in a cylindrical cavity of the tube 23 whose axis A-A (see Fig. 5), coinciding with the axis of the spindle 9, is eccentric with respect to the axis B-B of the outer cylindrical surface 30 of the said tube. In this way a rotation of the tube 23 about the axis B-B causes a movement of the axis A-A of the spindle 9 with respect to the axis C-C of the spindle 11. The rotation of the tube 23 about its own axis B-B is provided by a system comprising a ring gear 33 integral with the tube 23 and a pinion 35 integral with a bar 37. The bar 37 is housed in a hole 39 in the block 17. The wall of the hole 39 is cut parallel to the axis so that, by means of the screw 41, the bar 37 can be locked in its angular position, or can be allowed to rotate together with the pinion 35 about its axis, with consequent rotation of the tube 23 about the axis B-B. Once the relative position of the two spindles 9 and 11 has been adjusted with respect to a direction perpendicular to the axes, the screw 41 is tightened to lock the bar 37 and consequently to prevent angular movements of the tube 23.

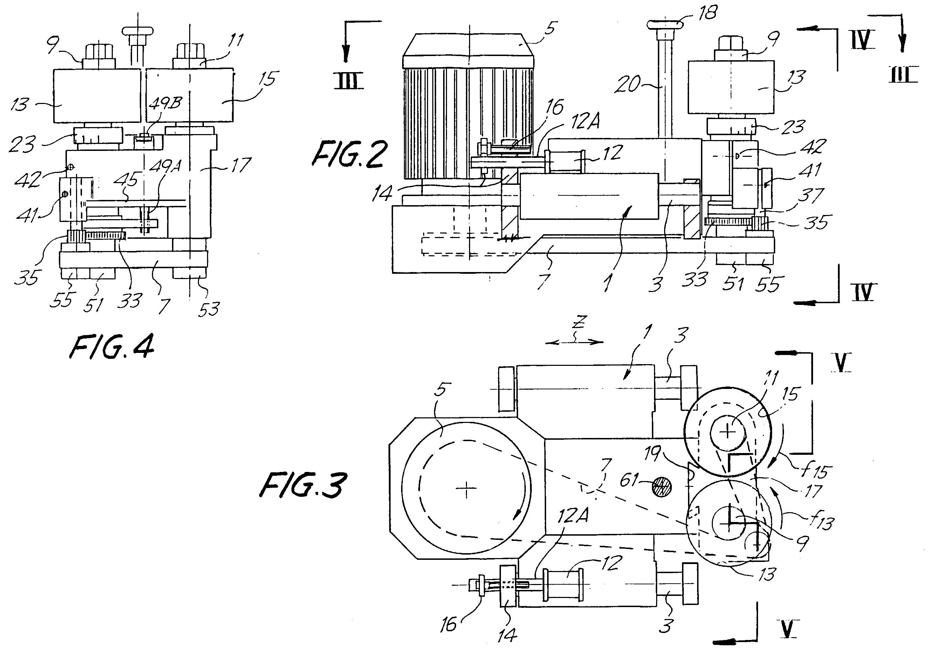

The position of the tool 13 along the axis of rotation A-A is then adjusted by moving the tube 23 along its axis, when its angular position has been fixed as described above. For this purpose, the tube is integral with a bracket 45, provided with a threaded hole 47 in which the end 49A of a bar 49 carried by the block 17 is engaged. The end 49B of the rod 49 projects from the block 17 and provides a connection point for the rotation of the bar 49. A rotation of this bar causes, by means of the thread on the end portion 49A, a movement of the tube 23 along its axis B-B and consequently a vertical adjustment movement of the tool 13 carried by the spindle 9. Once the desired position along the axis A-A has been reached, the tube 23 is fully secured by means of a locking screw 42 (Fig. 2).

Fig. 5 also shows the rollers 51 and 53 round which the belt 7 runs and which are keyed to the shafts of the spindles 9 and 11, and also the return roller 55 which runs freely on the bar 37.

The unit described above operates in the following way.

Before the start of machining of a set of workpieces, suitable tools 13 and 15 must be mounted and adjusted with respect to each other so that they become perfectly aligned in order to be able to machine adjacent portions of the same surface of the workpiece. For this purpose, the bar 49 is moved for the vertical adjustment of the position of the tool 13 with respect to the tool 15, and the bar 37 is moved for the adjustment, through the pinion and ring gear system 33, 35, of the position of the said tool in a horizontal plane. By means of this relative adjustment of the position of the tool 13 with respect to the tool 15, it is possible, for example, to align the teeth 13A, 15A of two milling cutters for forming combed joints or the like. The form of the profile of the tools is shown only in Fig. 5, while in the other figures the tools are represented, in a simplified and schematic way, with cylindrical surfaces. However, it is to be understood that these tools may be of any shape, provided that they are identical to each other.

On completion of the relative adjustment of the two tools, which is necessary only when they are replaced, the absolute adjustment of the unit carrying the tools, in other words of the block 17, with respect to the bed on which the workpiece (not shown) is secured, is carried out. For this purpose, the screw 16 is moved for adjustment as shown by the arrow Z, and the handwheel 18 is moved for vertical adjustment of the block 17.

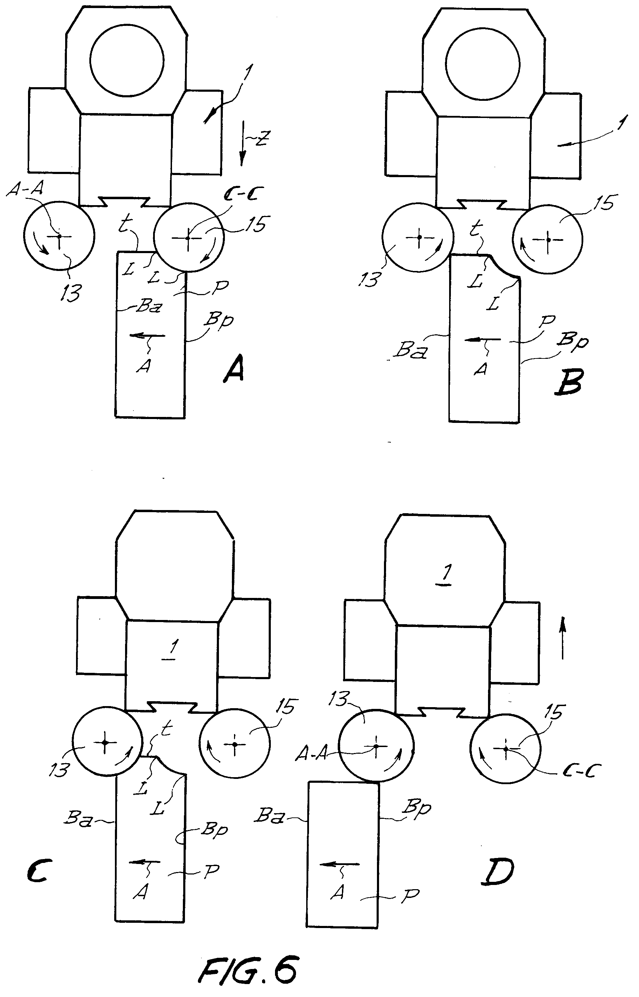

On completion of the relative adjustment and the absolute adjustment of the tools 13 and 15, the workpiece can be machined using various procedures. Fig. 6 shows in a highly schematic way four successive stages of machining according to a first working procedure. The workpiece, indicated in a general way by P, is made to advance as shown by the arrow A, which represents the direction of the feed movement. Ba and Bp indicate the front edge and the rear edge respectively of the workpiece P. The position of the edges is related to the direction of advance, so that the front edge is that which is first to enter the working area of the tools 13 and 15. The advance movement of the workpiece as shown by A and the movement of the unit carrying the tools 13 and 15 towards the workpiece as shown by the arrow Z are coordinated in such a way that the tool 15 comes into contact with the surface t of the workpiece after the front edge Ba has moved beyond the vertical plane passing through the axis of the tool 15 and perpendicular to the feed direction. In this way, the tool 15 machines the surface t over a portion of cylindrical surface delimited by the lines L-L in Fig. 6. Since the rotation of the tool 15 is clockwise, the fibres of the workpiece at the rear edge Bp are compressed, thus avoiding splintering the corner.

As the feed movement of the workpiece P is continued, the workpiece passes from the position in Fig. 6A to the position in Fig. 6B, where the tool 13 rotating in the anticlockwise direction starts to machine the portion of surface assigned to it, starting from the front edge Ba. The anticlockwise direction of rotation of the tool 13 makes it possible to avoid splintering the front edge.

Fig. 6C shows an intermediate stage of the machining carried out by the tool 13, while Fig. 6D shows the final stage of machining in which the rear edge Bp of the workpiece lies in the vertical plane passing through the axis A-A of the tool 13.

In this working procedure, the workpiece is fed into the machine from the right-hand side in Fig. 6, and emerges, fully machined, from the left-hand side, without reversal of movement. Evidently, since the movements concerned are relative, the workpiece may remain fixed with respect to the machine frame while the slide 1 may traverse with a movement in the opposite direction to that of the arrow A.

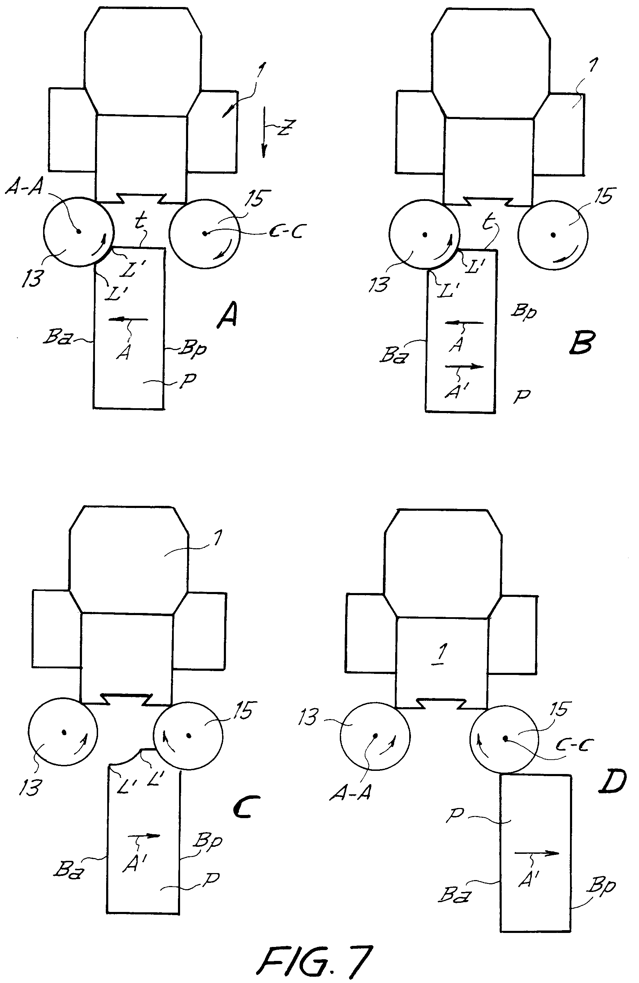

Fig. 7 shows schematically four successive stages of a different working procedure, in which the surface t of the workpiece P is machined with a reversal of the feed movement. With reference to Fig. 7A initially, the workpiece P is made to advance as shown by the arrow A until the front edge Ba is brought up to the tool 13 which again rotates in the anticlockwise direction. The traversing of the slide 1 as shown by the arrow Z is coordinated with the movement of the workpiece in such a way that there is no interference between the workpiece and the tool 15 in this first stage of machining. The tool 13 machines a portion of the surface t of the workpiece P as shown in Figs. 7A and 7B. The cylindrical portion of the surface of the workpiece P machined by the tool 13 is delimited by the generatrices of the form L'. When the workpiece P is approximately in the position shown in Fig. 7B, with the front edge Ba next to the axis of the tool 13, the feed movement is reversed so that the rear edge Bp is brought towards the tool 15 which rotates in a clockwise direction. Fig. 7C shows the initial stage of machining of the portion of surface adjacent to the rear edge Bp. Fig. 7D shows the final stage of machining in which the workpiece moves away from the tool 15.

By contrast with what is shown in Fig. 6, in the working procedure shown in Fig. 7 the workpiece enters and leaves from the same side, the feed movement being reversed approximately half way through the machining.

In this second working procedure also, the directions of rotation of the tools 13 and 15 are such that splintering at the tool entry and exit edges is avoided.

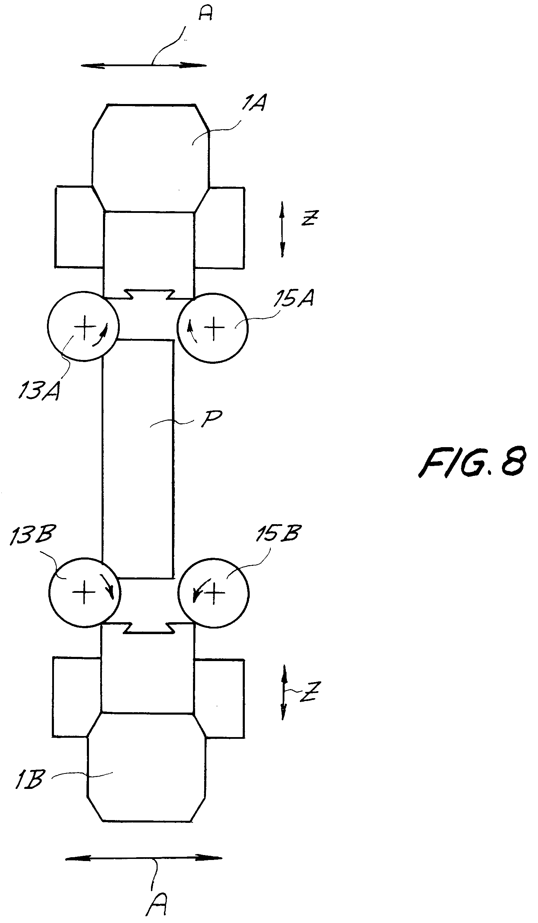

Fig. 8 shows in a highly schematic way a arrangement having two units 1A, 1B with two spindles each, provided with tools 13A, 15A and 13B, 15B respectively. Each unit machines one end of the workpiece P. The machining of the two ends may be simultaneous, and the feed movement as shown by the arrow A may be provided to the working units rather than to the workpiece P. The inclination of the units 1A, 1B with respect to the workpiece may be adjustable (for machining curved workpieces, for example) along two perpendicular axes, by a known method.

It is to be understood that the drawing shows only an example provided solely as a practical demonstration of the invention, and that this invention may be varied in its forms and dispositions without thereby departing from the scope of the claims of the invention. Any reference numbers in the appended claims are intended to facilitate the reading of the claims with reference to the description and to the drawing, and do not limit the scope of protection represented by the claims.

## Claims

1. Working unit for machining wood, comprising at least two spindles with parallel axes with identical and counter-rotating milling tools, for machining the ends of workpieces made of wood or similar material, wherein said spindles (9, 11) are movable simultaneously in a direction (Z) towards the workpiece (P), substantially perpendicular to the axis of rotation (A-A; C-C) of one of the tools (13; 15), and wherein the relative positions of the two spindles are adjustable in a first direction parallel to the axes of rotation (A-A; C-C) and in a direction perpendicular to the said axes, characterized in that the said two spindles are carried by a single movable slide (1) to which is imparted a movement towards the workpiece, the tools being thus jointly moved towards said workpiece (P), and that said relative adjustment is independent of the adjustment of the absolute position of said slide (1) carrying said spindles (13,15) with respect to the workpiece (P).

2. Working unit according to Claim 1, characterized in that the direction (Z) towards the workpiece (P) is approximately perpendicular to a plane containing the axes (A-A, C-C) of rotation of the tools (13; 15).

3. Working unit according to Claim 1 or 2, characterized in that the movement (Z) of the spindles towards the workpiece is substantially perpendicular to the feed movement (A; A') of the workpiece with respect to the tools (13; 15).

4. Working unit according to one or more of the preceding claims, characterized in that the movement of the tools towards the workpiece and the feed movement between the workpiece and the tools are adjusted in such a way that the machining of one end of the workpiece takes place entirely with a feed movement (A) of the workpiece in a single direction with respect to the tools.

5. Working unit according to one or more of Claims 1 to 3, characterized in that the movement of the tools towards the workpiece and the feed movement (A; A') between the workpiece and the tools are adjusted in such a way that the machining of one end of the workpiece is done with a feed movement in two stages, first in one direction (A) and then in the opposite direction (A').

6. Working unit according to one or more of the preceding claims, characterized in that one (9) of the said spindles (9, 11) is supported on a member (23) which is movable with respect to the other spindle in a direction parallel to the axis of the spindle.

7. Working unit according to Claim 6, characterized in that the said spindle support member (23) permits an adjustment of the position of the axis of rotation of the spindle in a direction perpendicular to the said axis.

8. Working unit according to Claim 6 or 7, characterized in that the said spindle support member (23) consists of a tube with an inner cavity which is eccentric with respect to the outer surface (30), the eccentricity permitting the adjustment of the position of the spindle in a direction perpendicular to its axis.

9. Working unit according to one or more of the preceding claims, characterized in that the two spindles are caused to rotate by a single motor (5) with a suitable mechanical transmission (7).

10. Working unit according to one or more of Claims 1 to 8 , characterized in that each spindle is caused to rotate by its own independent motor.

11. Machine tool for machining wood, characterized in that it comprises a working unit according to one or more of the preceding claims.

12. Machine tool according to Claim 11, characterized in that it comprises two working units according to one or more of Claims 1 to 10, symmetrically placed with respect to each other for the simultaneous machining of the two ends of a workpiece.

13. Machine tool according to Claim 12, characterized in that the workpiece is fixed with respect to the machine and that either the approach movement (as shown by Z) or the feed movement (as shown by A) is imparted to the working units.

14. Method for machining a workpiece made of wood or similar material, in which the end of the said piece is machined successively by two identical and counter-rotating tools and in which each tool machines a portion of the surface to avoid the splintering of the workpiece at its edges, characterized in that the said tools are moved jointly and simultaneously towards the workpiece by moving a slide towards said workpiece, said slide carrying said two tools and the relative positions of said tools being adjusted independently of the absolute positions thereof with respect to the workpiece (P).

15. Method according to Claim 14, characterized in that during the relative feed movement of the workpiece to the tools, the said tools are moved towards the surface of the workpiece to be machined so that the first tool machines the portion of surface adjacent to the rear edge (Bp) with respect to the feed direction, and the second tool, in succession to the first, machines the portion of surface adjacent to the front edge (Ba), the whole surface being machined with a feed movement in a single direction.

16. Method according to Claim 14, characterized in that during the relative feed movement of the workpiece to the tools, the said tools are moved towards the surface to be machined so that, in a first stage of machining, the workpiece passes the first tool without coming into contact with it, and comes into contact with the second tool which machines the portion of surface adjacent to the edge (Ba) of the workpiece which is the front edge with respect to the direction of entry of the workpiece into the working area of the tools, while, in a second stage of machining, the direction of the feed movement is reversed, and the first tool machines the portion of surface adjacent to the rear edge (Bp) of the workpiece.

17. Method according to Claim 14, characterized in that both ends of a workpiece are machined simultaneously, the feed movement being optionally imparted to the working units while the workpiece is fixed.

## Patentansprüche

1. Bearbeitungseinheit zum Bearbeiten von Holz, mit mindestens zwei Spindeln mit parallelen Achsen mit identischen und gegensinnig rotierenden Fräswerkzeugen zum Bearbeiten der Enden von Werkstücken aus Holz oder ähnlichem Material, wobei die Spindeln (9, 11) gleichzeitig in einer Richtung (Z) zum Werkstück (P) im wesentlichen rechtwinklig zur Rotationsachse (A-A; C-C) eines der Werkzeuge (13, 15) bewegbar sind, und wobei die relativen Positionen der beiden Spindeln zueinander in einer ersten Richtung parallel zu den Rotationsachsen (A-A; C-C) und in einer Richtung senkrecht zu diesen Achsen einstellbar sind, dadurch **gekennzeichnet,** daß die beiden Spindeln von einem einzigen bewegbaren Schlitten (1) getragen werden, dem eine Bewegung in Richtung auf das Werkstück erteilt wird, durch die die Werkzeuge gemeinsam gegen das Werkstück (P) bewegt werden, und daß die relative Einstellung unabhängig von der Einstellung der Absolutposition des die Spindeln (13, 15) tragenden Schlittens (1) in Bezug auf das Werkstück (P) ist.

2. Bearbeitungseinheit nach Anspruch 1,
dadurch **gekennzeichnet,** daß die Richtung (Z) zum Werkstück (P) hin annähernd rechtwinklig zu einer die Rotationsachsen (A-A; C-C) der Werkzeuge (13, 15) enthaltenden Ebene ist.

3. Bearbeitungseinheit nach Anspruch 1 oder 2,
dadurch **gekennzeichnet,** daß die Bewegung (Z) der Spindel zum Werkstück hin im wesentlichen rechtwinklig zu der Vorschubbewegung (A; A') des Werkstücks in Bezug auf die Werkzeuge (13, 15) ist.

4. Bearbeitungseinheit nach einem oder mehreren der vorangehenden Ansprüche,
dadurch **gekennzeichnet,** daß die Bewegung der Werkzeuge zum Werkstück und die Vorschubbewegung zwischen dem Werkstück und den Werkzeugen derart eingestellt sind, daß die Bearbeitung eines Endes des Werkstücks zur Gänze mit einer Vorschubbewegung (A) des Werkstücke in einer einzigen Richtung relativ zu den Werkzeugen erfolgt.

5. Bearbeitungseinheit nach einem oder mehreren der Ansprüche 1 bis 3,
dadurch **gekennzeichnet**, daß die Bewegung der Werkzeuge zum Werkstück und die Vorschubbewegung (A; A') zwischen dem Werkstück und den Werkzeugen so eingestellt sind, daß die Bearbeitung eines Endes des Werkstücks mit einer Vorschubbewegung in zwei Stufen, zuerst in einer Richtung (A) und dann in der Gegenrichtung (A'), erfolgt.

6. Bearbeitungseinheit nach einem oder mehreren der vorangehenden Ansprüche,
dadurch **gekennzeichnet**, daß eine (9) der Spindeln (9, 11) von einem Element (23) getragen wird, welches in Bezug auf die andere Spindel in einer Richtung parallel zur Spindelachse bewegbar ist.

7. Bearbeitungseinheit nach Anspruch 6,
dadurch **gekennzeichnet**, daß das Spindeltragelement (23) eine Einstellung der Position der Rotationsachse der Spindel in einer Richtung senkrecht zu dieser Achse ermöglicht.

8. Bearbeitungseinheit nach den Ansprüchen 6 oder 7,
dadurch **gekennzeichnet**, daß das Spindeltragelement (23) aus einem Rohr mit einem inneren Hohlraum besteht, welcher exzentrisch in Bezug auf die äußere Oberfläche (30) ist, wobei die Exzentrizität die Einstellung der Position der Spindeln in einer Richtung senkrecht zu ihrer Achse ermöglicht.

9. Bearbeitungseinheit nach einem oder mehreren der vorangehenden Ansprüche,
dadurch **gekennzeichnet**, daß die zwei Spindeln durch einen einzigen Motor (5) mit einer geeigneten mechanischen Übertragung (7) gedreht werden.

10. Bearbeitungseinheit nach einem oder mehreren der vorangehenden Ansprüche,
dadurch **gekennzeichnet**, daß jede Spindel durch ihren eigenen unabhängigen Motor gedreht wird.

11. Werkzeugmaschine zur Bearbeitung von Holz,
dadurch **gekennzeichnet**, daß sie eine Bearbeitungseinheit entsprechend einem oder mehreren der vorangehenden Ansprüche enthält.

12. Werkzeugmaschine nach Anspruch 11,
dadurch **gekennzeichnet**, daß sie zwei Bearbeitungseinheiten entsprechend einem oder mehreren der Ansprüche 1 - 10 enthält, die symmetrisch zueinander angeordnet sind zur gleichzeitigen Bearbeitung der beiden Enden eines Werkstücks.

13. Werkzeugmaschine nach Anspruch 12,
dadurch **gekennzeichnet**, daß das Werkstück in Bezug auf die Maschine fixiert ist, und daß entweder die Anstellbewegung (wie bei Z gezeigt) oder die Vorschubbewegung (wie bei A gezeigt) auf die Bearbeitungseinheiten aufgebracht wird.

14. Verfahren zur Bearbeitung eines Werkstücke aus Holz oder ähnlichem Material, wobei das Ende des Werkstücks sukzessive durch zwei identische und gegensinnig rotierende Werkzeuge bearbeitet wird, und wobei jede Werkzeug einen Teil der Oberfläche bearbeitet, um das Splittern des Werkstücks an seinen Kanten zu vermeiden,
dadurch **gekennzeichnet**, daß die Werkzeuge zusammen und gleichzeitig auf das Werkstück zubewegt werden, indem ein Schlitten auf das Werkstück zubewegt wird, wobei der Schlitten die zwei Werkzeuge trägt, und wobei die relative Position der Werkzeuge unabhängig von ihrer Absolutposition bezüglich des Werkstücke (P) eingestellt wird.

15. Verfahren nach Anspruch 14,
dadurch **gekennzeichnet**, daß während der relativen Vorschubbewegung des Werkstücks zu den Werkzeugen die Werkzeuge zu der Oberfläche des zu bearbeitenden Werkstücks bewegt werden, so daß das erste Werkzeug den Oberflächenabschnitt der an die bezüglich der Vorschubrichtung hintere Kante (Bp) angrenzt, bearbeitet, und wobei das zweite Werkzeug nachfolgend auf das erste Werkzeug den Oberflächenabschnitt bearbeitet, der der vorderen Kante (Ba) benachbart ist, wobei die gesamte Oberfläche mit einer Vorschubbewegung in einer einzigen Richtung bearbeitet wird.

16. Verfahren nach Anspruch 14,
dadurch **gekennzeichnet**, daß während der Vorschubbewegung des Werkstücks relativ zu den Werkzeugen die Werkzeuge derart auf die zu bearbeitende Oberfläche zubewegt werden,
daß in einer ersten Bearbeitungsstufe das Werkstück an dem ersten Werkzeug vorbeiläuft, ohne in Kontakt mit diesem zu gelangen, und in Kontakt mit dem zweiten Werkzeug kommt, welches den Oberflächenabschnitt angrenzend an diejenige Kante (Ba) des Werkstücks bearbeitet, welche die vordere Kante bezüglich der Eintrittsrichtung des Werkstücks in den Bearbeitungsbereich des Werkzeugs ist,
während in einer zweiten Bearbeitungsstufe die Vorschubrichtung umgekehrt wird und das erste Werkzeug den Oberflächenabschnitt der angrenzend an die hintere Kante (Bp) des Werkstücke bearbeitet.

17. Verfahren nach Anspruch 14,
dadurch **gekennzeichnet**, daß beide Enden des Werkstücks gleichzeitig bearbeitet werden, wobei die Vorschubbewegung wahlweise auf die Bearbeitungseinheiten aufgebracht wird, während das Werkstück feststeht.

## Revendications

1. Unité d'usinage pour usiner du bois, comprenant au moins deux broches présentant des axes parallèles, munies de fraises à contrarotation identiques, pour usiner les extrémités de pièces à usiner réalisées en bois ou en un matériau similaire, dans laquelle lesdites broches (9, 11) peuvent se déplacer e simultanément dans un sens (Z) dirigé vers la pièce à usiner (P), sensiblement perpendiculairement à l'axe de rotation (A-A ; C-C) de l'un des outils (13, 15) et dans laquelle les positions relatives des deux broches peuvent être réglées suivant une première direction parallèle aux axes de rotation (AA ; C-C) et suivant une direction perpendiculaire auxdits axes, caractérisée en ce que lesdites deux broches sont supportées par un unique coulisseau mobile (1) auquel est imprimé un déplacement en direction de la pièce à usiner, les outils étant par conséquent déplacés de façon conjointe en direction de ladite pièce à usiner (P), et en ce que ledit réglage relatif est indépendant du réglage de la position absolue dudit coulisseau (1) supportant lesdites broches (13, 15) par rapport à la pièce à usiner (P).

2. Unité d'usinage selon la revendication 1, caractérisée en ce que le sens (Z) dirigé vers la pièce à usiner (P) est approximativement perpendiculaire à un plan contenant les axes (A-A, C-C) de rotation des outils (13 ; 15).

3. Unité d'usinage selon la revendication 1 ou 2, caractérisée en ce que le mouvement (Z) des broches en direction de la pièce à usiner est sensiblement perpendiculaire au mouvement d'avance (A ; A') de la pièce à usiner par rapport aux outils (13 ; 15).

4. Unité d'usinage selon une ou plusieurs des revendications précédentes, caractérisée en ce que le mouvement des outils en direction de la pièce à usiner et le mouvement d'avance entre la pièce à usiner et les outils sont réglés de telle sorte que l'usinage d'une extrémité de la pièce à usiner s'effectue en totalité avec un mouvement d'avance (A) de la pièce à usiner dans un seul sens par rapport aux outils.

5. Unité d'usinage selon une ou plusieurs des revendications 1 à 3, caractérisée en ce que le mouvement des outils en direction de la pièce à usiner et le mouvement d'avance (A ; A') entre la pièce à usiner et les outils sont réglés de telle sorte que l'usinage d'une extrémité de la pièce à usiner soit réalisé avec un mouvement d'avance selon deux étapes, tout d'abord dans un sens (A) puis dans le sens opposé (A').

6. Unité d'usinage selon une ou plusieurs des revendications précédentes, caractérisée en ce que l'une (9) desdites broches (9, 11) est supportée sur un élément (23) qui est mobile par rapport à l'autre broche suivant une direction parallèle à l'axe de la broche.

7. Unité d'usinage selon la revendication 6, caractérisée en ce que ledit élément de support de broche (23) permet un réglage de la position de l'axe de rotation de la broche suivant une direction perpendiculaire audit axe.

8. Unité d'usinage selon la revendication 6 ou 7, caractérisée en ce que ledit élément de support de broche (23) est constitué par un tube muni d'une cavité interne qui est excentrique par rapport à la surface externe (30), l'excentricité permettant le réglage de la position de la broche suivant une direction perpendiculaire à son axe.

9. Unité d'usinage selon l'une quelconque ou plusieurs des revendications précédentes, caractérisée en ce que les deux broches sont entraînées en rotation à l'aide d'un unique moteur (5) muni d'une transmission mécanique appropriée (7).

10. Unité d'usinage selon l'une quelconque ou plusieurs des revendications 1 à 8, caractérisée en ce que chaque broche est entraînée en rotation au moyen de son propre moteur indépendant.

11. Machine-outil pour usiner du bois, caractérisée en ce qu'elle comprend une unité d'usinage selon une ou plusieurs des revendications précédentes.

12. Machine-outil selon la revendication 11, caractérisée en ce qu'elle comprend deux unités d'usinage selon une ou plusieurs des revendications 1 à 10, placées de façon symétrique l'une par rapport à l'autre pour l'usinage simultané des deux extrémités d'une pièce à usiner.

13. Machine-outil selon la revendication 12, caractérisée en ce que la pièce à usiner est fixe par rapport à la machine et en ce que soit le mouvement d'approche (comme représenté par Z), soit le mouvement d'avance (comme représenté par A) est imprimé aux unités d'usinage.

14. Procédé d'usinage d'une pièce à usiner réalisée en bois ou en un matériau similaire, dans lequel l'extrémité de ladite pièce est usinée successivement à l'aide de deux outils à contrarotation identiques et dans lequel chaque outil usine une partie de la surface pour éviter la formation d'éclats de bois de la pièce à usiner au niveau de ses bords, caractérisé en ce que l'on déplace lesdits outils de façon conjointe et simultanément en direction de la pièce à usiner en déplaçant un coulisseau en direction de ladite pièce à usiner, ledit coulisseau supportant lesdits deux outils et les positions relatives desdits outils étant réglées indépendamment de leurs positions absolues par rapport a la pièce à usiner (P).

15. Procédé selon la revendication 14, caractérisé en ce que, pendant le mouvement d'avance relatif de la pièce à usiner par rapport aux outils, lesdits outils sont déplacés en direction de la surface de la pièce à usiner de telle sorte que le premier outil usine la partie d'une surface adjacente au bord arrière (Bp) par rapport au sens d'avance et que le second outil, suite au premier, usine la partie d'une surface adjacente au bord avant (Ba), la surface dans sa totalité étant usinée avec un mouvement d'avance suivant un unique sens.

16. Procédé selon la revendication 14, caractérisé en ce que, pendant le mouvement d'avance relatif de la pièce à usiner par rapport aux outils, lesdits outils sont déplacés en direction de la surface à usiner de telle sorte que, lors d'une première étape de l'usinage, la pièce à usiner passe devant le premier outil sans venir en contact avec lui et vienne en contact avec le second outil qui usine la partie d'une surface adjacente au bord (Ba) de la pièce à usiner qui est le bord avant par rapport au sens d'entrée de la pièce à usiner dans la zone d'usinage des outils tandis que, lors d'une seconde étape d'usinage, le sens du mouvement d'avance est inversé, et le premier outil usine la partie d'une surface adjacente au bord arrière (Bp) de la pièce à usiner.

17. Procédé selon la revendication 14, caractérisé en ce que les deux extrémités d'une pièce à usiner sont usinées simultanément, le mouvement d'avance étant imprimé optionnellement aux unités d'usinage tandis que la pièce à usiner est fixe.
